# EUROPEAN PATENT APPLICATION

(11) **EP 1 985 514 A1**
(43) Date of publication of application: **29.10.2008**
(21) Application number: 08007938.7
(22) Date of filing: 24.04.2008
(51) Int. Cl.: B60T 8/36, B60T 15/02

(54) **Arrangement with a solenoid coil and method for the production thereof**

(30) Priority: 26.04.2007 DE 102007019800
(71) Applicant: Tyco Electronics Belgium EC N.V., 8020 Oostkamp (BE)
(72) Inventor: Depoortere, Björn, 8750 Wingene (BE); Baertsoen, Peter, 9870 Zulte (BE); Van Cauwenberge, Jan, 9880 Aalter (BE)
(74) Representative: Beck, Josef

(57) **Abstract**

An arrangement with a housing (1), with a solenoid coil (9), with a yoke housing (12, 13, 14, 15, 16) in which the solenoid coil (9) is arranged, wherein the solenoid coil (9) is arranged between a first and second yoke base (13, 16) of the yoke housing, a resilient member (23) being provided on an outer face of the second yoke base (16) remote from the solenoid coil (9), the resilient member (23) being provided so as to rest on a contact surface (26).

## Description

The invention relates to an arrangement with a solenoid coil according to claim 1 and a method for the production thereof according to claim 12.

The arrangement with the solenoid coil is, for example, part of a solenoid valve for controlling a hydraulic flow. In particular, the arrangement with a solenoid coil may be part of a solenoid valve for an antilock braking system of a motor vehicle.

A plurality of arrangements with a solenoid coil is known from the state of the art. For example, a control device for a hydraulic brake is known from DE 19833498A1 which comprises a hydraulic unit with a valve unit of a solenoid valve, a cover being provided on a side surface of the hydraulic unit, an electronic control unit being provided with a coil unit of the solenoid valve, and a coil holder being provided at an opening side of the cover, which coil holder resiliently contacts a lower part of the coil unit. The coil unit is held in a non-positive manner by the coil holder and a lid of the cover. A resilient material is inserted between an upper part of the coil unit and the cover or between a lower part of the coil unit and the coil holder. The resilient material which is inserted between the upper part of the coil unit and the cover and which is surrounded by protrusions exerts pressure on the coil unit and forces the coil unit in a direction away from the cover by way of the counterforce of the cover. The resilient material may be an annular rubber material. In the resilient material an opening is formed, into which a convex part of the coil unit is inserted. The purpose of the resilient material is to connect the coil unit to the solenoid valve cover in a non-positive manner and to act as a sealing material in order to seal openings in the cover. The coil holder is a support which determines the position of the lower part of the coil unit and the purpose of which is to exert a resilient force on the coil unit in the direction of the cover. The coil holder comprises an opening, through which a valve unit is inserted according to the position of the corresponding solenoid valve. The spring tension on the coil holder is produced by upper protrusions and lower protrusions being formed on both surfaces of the coil holder. The lower protrusions formed on the coil holder resiliently contact the valve block. The coil holder is therefore slightly deformed so as to transfer the deforming force to the lower surface of the coil unit via the upper protrusions. As a result, the force which is produced by the resilient material and acts non-positively on the upper and lower parts of the coil unit and on the coil holder is greater than before the valve block was assembled.

Furthermore, DE 69809501T2 discloses a solenoid valve arrangement with resilient means for fixing to a support block, such as a hydraulic block. The electromagnetic valve arrangement comprises a solenoid valve which consists of a coil and a pole mass and comprises spring means for pressing the electromagnetic valve against a support, for example, a hydraulic block. The coil and the pole mass are thus separated from one another and may move relative to one another. Furthermore, the retaining spring means are inserted, on the one hand, between the coil and the support and, on the other hand, between the coil and the pole mass. The spring means are formed of blocks of resilient material, such as rubber.

In addition, a block made of resilient material, such as rubber, is inserted between a wall and an upper end face of the pole mass. Furthermore, two resilient support means in the shape of a disc are inserted between a flange and a housing rigidly connected to the coil, the pole mass resting on the flange. The resilient support means accommodates for any changes in the position of the coil and pole mass with respect to a processor. In addition, the pole mass therefore rests permanently on the flange. The arrangement includes an electromagnetic valve and a flange for fixing said valve to a support, such as a hydraulic block, which is provided with a recess in which an element of the electromagnetic valve is received. With regard to the flange fixed to the support, the electromagnetic valve is held at the support by cooperating support surfaces of the flange and of the electromagnetic valve.

Furthermore, a solenoid valve controller is known from DE 102005041240A1, the solenoid valve controller comprising a base, on which an elastomer element is provided projecting inwardly into the control housing. A solenoid coil yoke is provided on the elastomer element, the solenoid coil yoke being pressed together with a control housing directly onto the outer face of a hydraulic device by way of the elastomer element and in the process receiving a solenoid valve unit of the hydraulic device. On the one hand, the elastomer element serves as a bearing and, on the other hand, the outer face of the hydraulic device serves as an abutment for the solenoid coil yoke, the solenoid coil yoke thus being held in the control housing free of play.

The object of the invention is to provide an arrangement with a solenoid coil with a resilient member which can be produced in a simpler manner, is more cost-effective and can be individually adapted to a control valve.

The object of the invention is achieved by the arrangement according to claim 1 and by the method according to claim 12.

Further advantageous embodiments of the invention are disclosed in the dependent claims.

An advantage of the arrangement according to the invention is that assembly is simple and it is possible to resiliently fix the solenoid coil in an improved manner. The resilient member is arranged on the yoke base, i.e. a yoke plate, which is arranged directly above the solenoid coil. As a result, it is possible to directly transfer force to the solenoid coil. The risk of effecting or inducing torque in the solenoid coil when mounting it to a contact surface is thus reduced.

In addition, the resilient member is arranged on a component member, the yoke base, which is cost-effective and easy to dismantle, in such a way that only the cost-effective component member must be replaced if the resilient member is faulty. As a result, it is possible to reduce the cost of repairing defective parts.

Furthermore, the yoke base is symmetrical about a center axis of the solenoid coil and has a cross-section that is identical to, or at least similar to, that of the solenoid coil. The resilient member may therefore first of all be arranged on the yoke base. After curing, the yoke base is fixed to the yoke housing with the resilient member. Due to the shape of the yoke base and the symmetry with regard to the mounting position, the yoke base can be fitted into the cylindrical opening of the yoke housing without the need for complex adjustment.

The invention will be described in more detail with reference to the drawings, in which:
Fig. 1 is a cross-section through an arrangement with a solenoid coil,
Fig. 2 is a cross-section through an arrangement with a solenoid coil and with a solenoid valve,
Fig. 3 is a plan view of a first embodiment of the resilient member,
Fig. 4 is a plan view of a second embodiment of the resilient member, and
Fig. 5 is a plan view of a third embodiment of the resilient member.

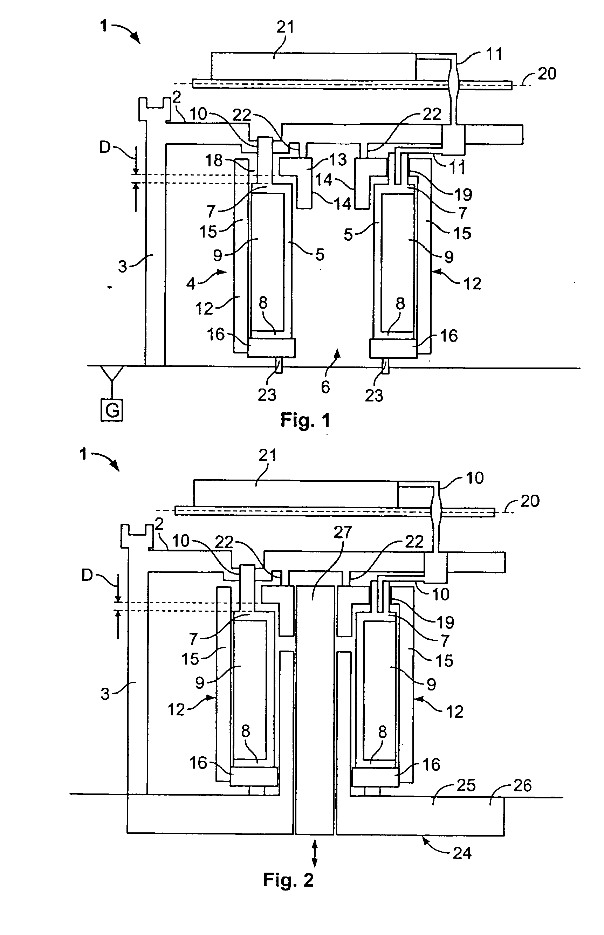

Fig. 1 is a partly sectional view of an arrangement with at least one solenoid coil. The arrangement comprises a housing 1 provided with a base plate 2 and a side wall 3. In the housing 1, a coil unit 4 is provided as the solenoid coil. The coil unit 4 comprises a coil former 5 which is configured substantially as a cylinder-shaped sleeve with first and second annular disc-shaped cover plates 7, 8 formed at opposite ends of the coil former 5. The coil former 5 comprises a central cylinder-shaped recess 6. A coil wire is wound in the form of a cylinder-shaped coil 9 on an outer face of the coil former 5. The coil 9 is arranged between the first and second cover plates 7, 8. The coil former 5 is fixed to the base plate 2 via a fixing member 10. The fixing member 10 is formed on the first cover plate 7, which is associated with the base plate 2. The fixing member 10 may be configured as a pin which is inserted into a recess in the base plate 2. In order to achieve a better fit, the pin may have a contour or ribbing which can engage in a corresponding contour or ribbing of an inner wall of the recess in the base plate 2.

The coil unit 4 is arranged in a yoke housing 12. The yoke housing 12 comprises an annular first yoke base 13, with which the base plate 2 is associated. At an inner edge of the first yoke base 13, a first yoke sleeve 14 is provided which, starting from the first yoke base 13, extends in part into the recess 6 in the coil former 5. Furthermore, on an outer face of the first yoke base 13, a second yoke sleeve 15 is provided which, starting from the first yoke base 13, is guided along the coil unit 4 as far as the second cover plate 8 of the coil former 5. In addition, a second yoke base 16 is provided which is arranged on an outer face of the second cover plate 8 and which, with an outer edge, is in contact with an inner face of the second yoke sleeve 15. The second yoke base 16 is configured as an annular surface. A central opening 17 in the second yoke base 16 is arranged substantially symmetrically about the recess 6 in the coil former 5. The second yoke base 16 is symmetrical with regard to a center point of a circle. It is therefore not necessary to align the second yoke base 16 in the second yoke sleeve 15 during assembly. The second yoke sleeve 15 comprises an annular opening, in which the second yoke base 16 is inserted for assembly.

The first yoke base 13 comprises a first recess 18, through which the fixing member 10 is guided. Furthermore, the first yoke base 13 comprises a second recess 19, through which electrical connections 11 of a coil wire are guided from the coil 9 via a bushing in the base plate 2 to a circuit board 20. The circuit board 20 is arranged outside the housing 1 and comprises at least one electrical circuit 21 which is connected to the electrical connections 11 and which is provided for controlling the coil unit 4. The circuit board 20 can be fixed in a further housing or to the base plate 2 of the first housing 1.

The electrical circuit 21 may be a control circuit for controlling a magnetic field through the coil unit 4. In particular, the electrical circuit 21 may be configured as a control circuit for controlling a solenoid valve, in particular for controlling a solenoid valve of an antilock braking system or an electronic stability program for controlling a motor vehicle.

The first yoke base 13 preferably rests on support members 22 of the base plate 2. The support members 22 may be configured in the form of individual webs or in the form of an annular web. The first cover plate 7 is at a distance D from the first yoke base 13. The first yoke base 13 and the first cover plate 7 are arranged substantially parallel. Different thermal linear endings can be evened out by the distance D.

At least one resilient member 23 is arranged on an outer face of the second yoke base 16. The resilient member 23 is made of a heat-resistant material which can preferably tolerate temperatures of up to 140 degrees Celsius without damaging the resilient member 23. The resilient member 23 may, for example, be produced, at least in part, from silicone. In a further embodiment, the resilient member 23 is made of silicone. The resilient member 23 can be fixed on the second yoke base 16 with the aid of an adhesive joint. In a further embodiment, the resilient member 23 is sputtered directly onto the second yoke base 16 with the aid of a sputtering process. During curing, a binding connection between the resilient member 23 and the second yoke base 16 is produced. After a curing process, which, for example, may take place in a curing oven, the resilient member 23 is finished. Depending on the material used, the sputtered resilient member 23 may be cured without using a curing oven. The sputtering process is particularly suitable for a resilient member 23 which is made, at least in part or completely, of silicone. Fig. 1 shows the resilient member 23 when it is unstressed.

In order to produce a solenoid valve, the solenoid coil is connected to a valve unit 24. The valve unit 24 is mounted on the housing 1, as shown in Fig. 2. The valve unit 24 comprises a valve unit housing 25 with a valve unit base plate 26. A displaceably mounted valve closing member 27 is guided through the valve unit base plate 26. The valve closing member 27 is guided into the recess 6 in the coil unit 4. The valve closing member 27 interacts with a control opening in a valve for controlling a liquid. Depending on the power supply to the coil 9, the valve closing member 27 is displaced in an axial direction in the recess 6. An opening cross-section of a control opening is set by the position of the valve closing member 27. A hydraulic flow of a control means is determined by the size of the control opening. The control means may, for example, be a hydraulic fluid of a braking system or a hydraulic fluid of a steering gear of a motor vehicle, which steering gear is assisted by a pressure fluid. The valve unit 24 may be part of a hydraulic pressure control system. In addition, the control means may also comprise any other type of medium, such as, for example, fuel.

When assembled, the valve unit base plate 26 is connected to the side wall 3 of the housing 1. The valve unit base plate 26 serves as a contact surface, against which the resilient member 23 is pressed so the resilient member 23 is held, at least in part, under compressive stress.

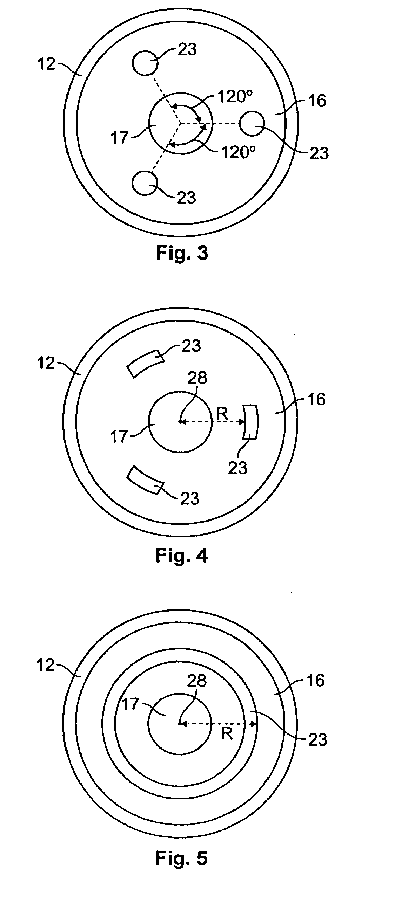

Fig. 3 is a plan view of the second yoke base 16. Three resilient members 23 are provided which are configured so as to be substantially point-shaped and are arranged at uniform angular distances with regard to a center axis 28 of the recess 6 on the annular disc-shaped second yoke base 16. The angular distances between a center axis 28 of the recess 6 in the coil unit 4 and two adjacent resilient members 23 are, for example, 120 degrees in each case. Depending on the selected embodiment, the angle between two of the adjacent resilient members 23 may also vary. A maximum distance between two of the adjacent resilient members 23 is less than 180 degrees. Depending on the selected embodiment, two or more than three of the resilient members 23 may also be configured on the second yoke base 16. If there are more than three of the resilient members 23, they may also be arranged with uniform angles between each pair of the adjacent resilient members 23.

Fig. 4 shows a further arrangement of the resilient members 23 which, in the illustrated embodiment, are not point-shaped as they are in Fig. 3, but are oblong and cylinder-shaped, in particular in the shape of circular segments, and arranged on the second yoke base 16. The three resilient members 23 are arranged, for example, at a uniform radial distance R to the center axis 28 of the recess 6 in the coil unite 4. In addition, the resilient members 23 each have the same cross-section and are equal in length. The resilient members 23 are in the shape of curved cylinders and are produced, for example, by sputtering with a spray nozzle.

Fig. 5 shows a further embodiment of the resilient member 23 formed on the second yoke base 16 in this embodiment as a ring, in particular as a closed ring and preferably as an annular ring, in which the second yoke base 16 is preferably arranged symmetrically about the center axis 28 in such a way that the center point of the circle of the resilient member 23 corresponds to the center axis 28. The resilient member 23 may also be in the shape of an open ring instead of being in the shape of a closed ring. In this embodiment, the resilient member 23 may also be sputtered directly onto the second yoke base 16 with the aid of an injection shot.

In order to support the coil unit 4, the support members 22, for example in the form of a cylindrically-shaped sleeve, may be formed at the base plate 2 in which the yoke housing 12 is arranged with the coil unit 4.

Only one of the solenoid coils and one of the solenoid valves with the valve closing member 27 are shown in each of the figures. Depending on the selected embodiment, a plurality of the solenoid coils and a plurality of the solenoid valves may be provided.

## Claims

1. Arrangement with a housing (1), with a solenoid coil (9) for a solenoid valve, with a yoke housing (12, 13, 14, 15, 16) in which the solenoid coil (9) is arranged, wherein the solenoid coil (9) is arranged between a first and second yoke base (13, 16) of the yoke housing, a resilient member (23) being provided on an outer face of the second yoke base (16) remote from the solenoid coil (9), the resilient member (23) being provided so as to rest on a contact surface (26).

2. Arrangement according to claim 1, wherein the solenoid coil comprises a coil (9) with a coil former (5), the coil former (5) comprising a fixing member (10) which is guided through a first recess (18) in the yoke housing (12) and is fixed to the housing (1).

3. Arrangement according to either claim 1 or claim 2, wherein an electrical connection (11) of the solenoid coil (9) is guided through the housing (1) to a circuit board (20), an electrical circuit (21) for controlling the solenoid coil (9) being arranged on the circuit board (20), the electrical connection (11) being connected to the electrical circuit (21).

4. Arrangement according to any one of claims 1 to 3, wherein the solenoid coil (9) is arranged at a distance from the first yoke base (13) of the yoke housing (12), the first yoke base (13) being associated with the housing (1).

5. Arrangement according to any one of claims 1 to 5, wherein the resilient member (23) is formed, at least in part, from silicone.

6. Arrangement according to any one of claims 1 to 4, wherein the resilient member (23) is made of silicone.

7. Arrangement according to any one of claims 1 to 6, wherein three resilient members (23) are provided on the outer face of the second yoke base (16).

8. Arrangement according to any one of claims 1 to 7, wherein the resilient member (23) is cylinder-shaped.

9. Arrangement according to any one of claims 1 to 8, wherein the resilient member (23) is ring-shaped.

10. Arrangement according to any one claims 1 to 9, wherein the resilient member is in the shape of molded part.

11. Arrangement according to any one of claims 1 to 10, wherein a valve unit (24) is provided with a valve closing member (27), the valve unit (24) comprising a valve unit housing (25), the valve closing member (27) protruding from the valve unit housing (25) and projecting, at least in part, into the solenoid coil (9), the housing (1) and the valve unit housing (25) being connected to one another and the resilient member (23) resting under compressive stress on the valve unit housing (25) as a contact surface.

12. Method for producing a valve unit (24) with a solenoid coil (9), wherein the valve unit (24) and the solenoid coil (9) are provided, a housing (1) being provided with the solenoid coil (9) and with a yoke housing (12) in which the solenoid coil (9) is arranged, the solenoid coil (9) being covered by a first yoke base (13) on a side remote from the housing (1), a resilient member (23) being arranged on a side of the first yoke base (13) remote from the solenoid coil (9), the valve unit (24) comprising a valve unit housing (25), from which a valve member protrudes, the valve member being inserted, at least in part, into the solenoid coil (9), the housing (1) and the valve unit housing (25) being connected to one another in such a way that the resilient member (23) rests under compressive stress on the valve unit housing (25).

13. Method according to claim 12, wherein the resilient member (23) is sputtered onto the yoke base (13) and the valve unit (24) is mounted after a curing process.
